# EUROPEAN PATENT APPLICATION

(11) **EP 4 194 152 A1**
(43) Date of publication of application: **14.06.2023**
(21) Application number: 22211160.1
(22) Date of filing: 02.12.2022
(51) Int. Cl.: B25J 9/10, B25J 9/12, B25J 17/00, B25J 13/08

(54) **JOINT ACTUATOR OF ROBOT**

(30) Priority: 10.12.2021 CN 202111505200
(71) Applicant: Coretronic MEMS Corporation, Zhunan Township 35053 (TW)
(72) Inventor: LIU, Kuang-Yao, MIAOLI COUNTY (TW); LIU, Shih-Wei, MIAOLI COUNTY (TW); CHANG, Ming-Ju, MIAOLI COUNTY (TW); CHANG, Yung-Yu, MIAOLI COUNTY (TW); HSIEH, Chi-Tang, MIAOLI COUNTY (TW)
(74) Representative: Ter Meer Steinmeister & Partner

(57) **Abstract**

A joint actuator of a robot includes a casing, a driving device, a driving shaft, a reducer, and a sensor. The driving device is disposed in the casing. The driving shaft is disposed in the casing and connected to the driving device, and the driving device is adapted to drive the driving shaft to rotate. The reducer is disposed in the casing and includes a power input component and a power output component. The power input component and the power output component are sleeved around the driving shaft, and the power input component is connected between the driving shaft and the power output component. The sensor is disposed on the power input component or the casing.

## Description

### BACKGROUND

### Technical Field

The disclosure relates to a joint actuator, and more particularly, to a joint actuator of a robot.

### Description of Related Art

Industrial robots may not only overcome the impact of harsh environments on production and reduce the use of manpower, but also improve production efficiency, thereby ensuring product quality. With the continuous development of industrial robot technology, the industrial robots no longer only have the function of carrying heavy objects, but may perform various high-precision and intelligent tasks, such as welding, precision assembly, grinding, opening holes, drilling and polishing, etc. Sensors may be used to improve the accuracy of actuation of the robot. However, in the current robots, the sensor is mostly an independent element disposed at the end of the robot arm. The connecting member is used to transmit force sensing signal between the sensor and the joint actuator, and the sensor must be routed to the joint actuator, which not only increases the size and weight of the device, but also fails to provide rapid and real-time feedback. In addition, in the current robots, the sensor may not directly sense the vibration of the joint actuator, and may not directly provide a warning signal during abnormal vibration.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object of the disclosure to provide a joint actuator of a robot, which may reduce a size and weight of a robot arm of the robot, and/or a sensor for the joint actuator providing rapid and real-time feedback and which may directly sense vibration of the joint actuator.

Other objects and advantages of the disclosure may be further understood from the technical features disclosed herein.

The object is solved by the features of the independent claims. Preferred embodiments are given in the dependent claims.

In order to achieve one, a part, or all of the above objectives or other objectives, an embodiment of the disclosure provides a joint actuator of a robot, including a casing, a driving device, a driving shaft, a reducer, and a sensor. The driving device is disposed in the casing. The driving shaft is disposed in the casing and connected to the driving device. The driving device is adapted to drive the driving shaft to rotate. The reducer is disposed in the casing and includes a power input component and a power output component. The power input component and the power output component are sleeved around the driving shaft, and the power input component is connected between the driving shaft and the power output component. The sensor is disposed on the power input component or the casing.

In one or more embodiments, the power input component may be a cap-shaped flex spline.

In one or more embodiments, the power output component may be a circular spline.

In one or more embodiments, the sensor may be disposed on the power input component.

In one or more embodiments, the sensor may be a strain gauge or a motion sensor.

In one or more embodiments, the sensor may be disposed on the casing and the sensor may be a motion sensor.

In one or more embodiments, the sensor may be disposed on an inner wall of the casing.

In one or more embodiments, the sensor may be adapted to detect a vibration state of the joint actuator.

In one or more embodiments, the sensor may transmit a sensing signal to a control unit of the joint actuator.

In one or more embodiments, the joint actuator may further comprise a dual encoder.

In one or more embodiments, the dual encoder may be connected to the driving device and the driving shaft.

In one or more embodiments, the driving device may be located between the dual encoder and the reducer.

In one or more embodiments, the dual encoder may comprise an input module and an output module.

In one or more embodiments, the driving shaft may comprise an input shaft and an output shaft.

In one or more embodiments, the input module may be connected to the input shaft and may rotate synchronously.

In one or more embodiments, the output module may be connected to the output shaft and may rotate synchronously.

In one or more embodiments, the input module and the output module may be disposed coaxially.

In one or more embodiments, the input module may comprise an input magnetic disk and an input rotating member.

In one or more embodiments, the output module may comprise an output magnetic disk and an output rotating member.

In one or more embodiments, the input magnetic disk may be fixed to the input rotating member.

In one or more embodiments, the input rotating member may be locked to the input shaft.

In one or more embodiments, the output magnetic disk may be fixed to the output rotating member.

In one or more embodiments, the output rotating member may be locked to the output shaft.

In one or more embodiments, the dual encoder may comprise a circuit board, an input sensor and an output sensor.

In one or more embodiments, the input sensor and the output sensor may be disposed on the circuit board.

In one or more embodiments, the input sensor may correspond to the input magnetic disk of the input rotating member.

In one or more embodiments, the output sensor may correspond to the output magnetic disk of the output rotating member.

In one or more embodiments, the input magnetic disk and the output magnetic disk may be disposed coplanar.

In one or more embodiments, the joint actuator may further comprise a control unit.

In one or more embodiments, the control unit may be electrically coupled to the sensor and the dual encoder to receive a sensing signal of the sensor.

In one or more embodiments, the input sensor and the output sensor may be disposed coplanar.

In one or more embodiments, the circuit board may be electrically coupled to the control unit.

In one or more embodiments, the input sensor and the output sensor may be adapted to respectively provide sensing signals to the circuit board.

In one or more embodiments, the circuit board may provide the sensing signals to the control unit.

In one or more embodiments, the power output component may be connected to a robot arm of the robot.

Based on the above, the embodiment of the disclosure has at least one of the following advantages or effects. The sensor in the disclosure is directly disposed on the power input component of the joint actuator or the casing of the joint actuator rather than at an end of the robot arm. In this way, an additional connecting member does not need to be used to transmit force between the sensor and the joint actuator, and the sensor does not need to be routed to the joint actuator additionally, thereby reducing the size and weight of the robot arm of the robot, and being relatively aesthetic. In addition, the sensor directly disposed on the joint actuator may provide the rapid and real-time feedback and may directly detect the vibration of the joint actuator, such that a warning signal is generated when the abnormal vibration is sensed.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a cross-sectional view of a joint actuator of a robot of an embodiment of the disclosure.
FIG. 2 is a partial perspective view of the joint actuator of FIG. 1.
FIG. 3 is a perspective view of a power input component of FIG. 2.
FIG. 4 is a cross-sectional view of some components of a dual encoder of FIG. 1.
FIG. 5 is a cross-sectional view of a joint actuator of a robot of another embodiment of the disclosure.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

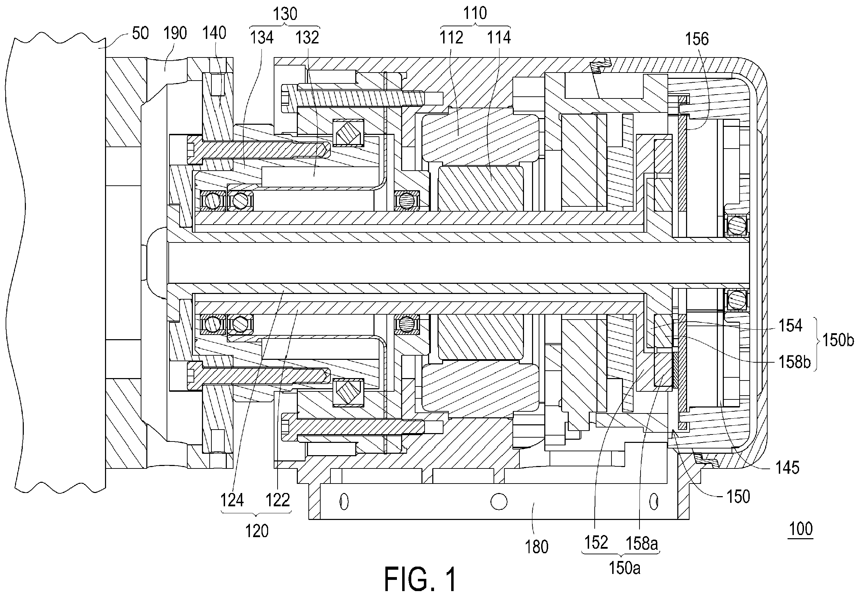

FIG. 1 is a cross-sectional view of a joint actuator of a robot according to an embodiment of the disclosure. Referring to FIG. 1, a joint actuator 100 in this embodiment includes a driving device 110, a driving shaft 120, a reducer 130, and a casing 180. The driving device 110, the driving shaft 120, and the reducer 130 are disposed in the casing 180. The driving shaft 120 is connected to the driving device 110. The driving device 110 is, for example, a frameless motor, and is adapted to drive the driving shaft 120 to rotate. The driving device 110 includes a coil 112 and a rotor 114 sleeved around the driving shaft 120. The rotor 114 is disposed inside the coil 112, that is, located between the driving shaft 120 and the coil 112.

The reducer 130 includes a power input component 132 and a power output component 134. The power input component 132 is, for example, a cap-shaped flex spline, and the power output component 134 is, for example, a circular spline. The power input component 132 and the power output component 134 are both sleeved around the driving shaft 120, and the power input component 132 is disposed between the driving shaft 120 and the power output component 134. The driving shaft 120 may be decelerated by a reduction ratio between the power input component 132 and the power output component 134. A specific structure design for achieving the reduction ratio in the reducer 130 is the existing related art, and thus details in this regard will not be further reiterated in the following. The robot in this embodiment includes a connecting member 190 and a robot arm 50. The robot arm 50 is connected to the power output component 134 of the joint actuator 100 through the connecting member 190, so as to transmit power to the robot arm 50.

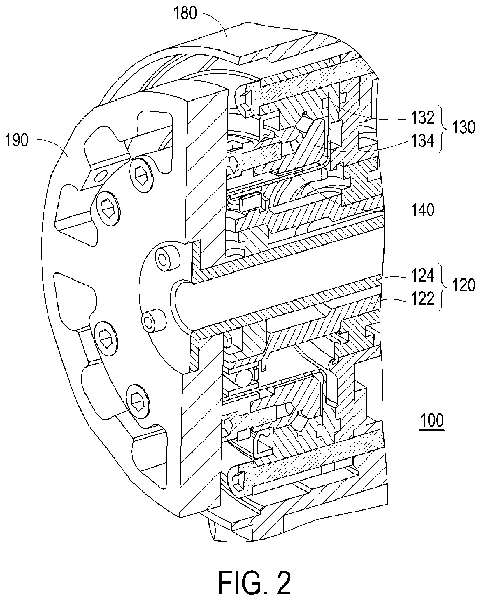

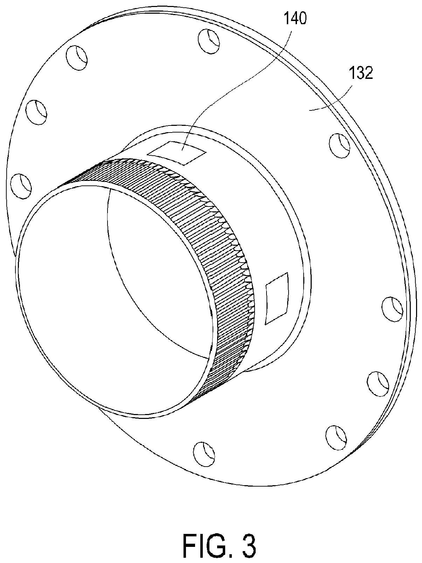

FIG. 2 is a partial perspective view of the joint actuator of FIG. 1. FIG. 3 is a perspective view of a power input component of FIG. 2. Referring to FIGs. 2 and 3, the joint actuator 100 in this embodiment further includes a sensor 140, and the sensor 140 is disposed on the power input component 132 of the reducer 130. The sensor 140 in this embodiment is, for example, a strain gauge or a motion sensor. The motion sensor may be an accelerometer, a speedometer, and an inertial measurement unit (IMU), etc., and the disclosure is not limited thereto. The sensor 140 may be adapted to detect a vibration state and/or torque of the joint actuator 100 on the power input component 132.

As mentioned above, the sensor 140 in this embodiment is directly disposed on the power input component 132 of the joint actuator 100 rather than at an end of the robot arm 50. In this way, an additional connecting member does not need to be used to transmit force between the sensor 140 and the joint actuator 100, and the sensor 140 does not need to be routed to the joint actuator 100 additionally, thereby reducing a size and weight of the robot arm 50 of the robot. In addition, the sensor 140 directly disposed on the power input component 132 of the joint actuator 100 may provide rapid and real-time feedback and may directly detect vibration of the joint actuator 100, such that a warning signal is directly generated when the abnormal vibration is sensed. The joint actuator 100 is controlled to perform a corresponding actuation in real time according to the feedback of the sensor 140, such as real-time stop or real-time reduction of output force to prevent the robot arm 50 from colliding with a target and causing damage to the robot arm 50.

Referring to FIG. 1, the joint actuator 100 in this embodiment further includes a control unit 145 and a dual encoder 150. The control unit 145 and the dual encoder 150 are disposed in the casing 180. The dual encoder 150 is connected to the driving device 110 and the driving shaft 120. The driving device 110 is located between the dual encoder 150 and the reducer 130 along the driving shaft 120. The dual encoder 150 is located between the driving device 110 and the control unit 145 along the driving shaft 120, and the sensor 140 and the dual encoder 150 are electrically coupled to the control unit 145.

In this way, in addition to using the sensor 140 to sense the force/vibration of the joint actuator 100, the dual encoder 150 is used to sense a displacement of an input end and an output end of the joint actuator 100, and sensing data contained in a displacement sensing signal of the dual encoder 150 and a torque sensing signal of the sensor 140 are both transmitted to the control unit 145 (which may be regarded as a driving circuit board). The control unit 145 may integrate the sensing signals to accurately determine a force state of the robot, thereby accurately performing the corresponding high-precision actuation. In other embodiments, the sensing signals of the dual encoder 150 and the sensor 140 may be transmitted to other types of control units included in the robot to control and monitor a motion of the joint actuator 100, and the disclosure is not limited thereto.

The dual encoder 150 in this embodiment includes an input rotating member 152 and an output rotating member 154 that are disposed coaxially. The driving shaft 120 is connected to the input rotating member 152 and the output rotating member 154 to enable the input rotating member 152 and the output rotating member 154 to rotate coaxially. In detail, the driving shaft 120 includes an input shaft 122 and an output shaft 124 that are disposed coaxially, and the input shaft 122 is sleeved around an outside of the output shaft 124. One end of the input shaft 122 is connected to the power input component 132 of the reducer 130, and the other end is connected to the input rotating member 152. The rotor 114 of the driving device 110 is connected to the input shaft 122 to drive the input shaft 122 to rotate. The output shaft 124 is connected to the output rotating member 154.

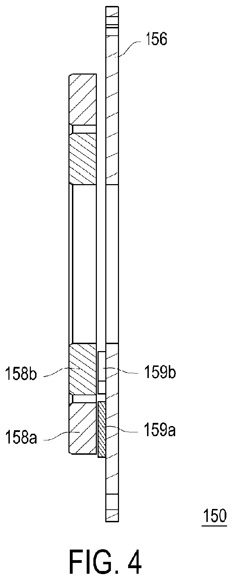

FIG. 4 is a cross-sectional view of some components of a dual encoder of FIG. 1. Referring to FIGs. 1 and 4, the dual encoder 150 further includes a circuit board 156, an input module 150a and an output module 150b, and an input sensor 159a and an output sensor 159b. The input module 150a and the output module 150b are disposed coaxially, and the input sensor 159a and the output sensor 159b are disposed on the circuit board 156 and respectively correspond to the input module 150a and the output module 150b. The input module 150a is connected to the input shaft 122 and rotates synchronously. The input module 150a includes an input magnetic disk 158a and the input rotating member 152. The input magnetic disk 158a is fixed to the input rotating member 152 in a manner of bonding or other suitable manners, and the input rotating member 152 is fixed to the input shaft 122 in a manner of locking or other suitable manners. The output module 150b is connected to the output shaft 124 and rotates synchronously. The output module 150b includes an output magnetic disk 158b and the output rotating member 154. The output magnetic disk 158b is fixed to the output rotating member 154 in the manner of bonding or other suitable manners, and the output rotating member 154 is fixed to the output shaft 124 in the manner of locking or other suitable manners.

In more detail, the input magnetic disk 158a is, for example, a circular input magnetic disk, and the output magnetic disk 158b is, for example, a circular output magnetic disk. The input sensor 159a is, for example, an input end magnetic head, and the output sensor 159b is, for example, an output end magnetic head. The input sensor 159a corresponds to the input magnetic disk 158a on the input rotating member 152 at an interval, and the output sensor 159b corresponds to the output magnetic disk 158b on the output rotating member 154 at an interval. The input sensor 159a and the output sensor 159b are adapted to respectively provide the sensing signals sensed by the input magnetic disk 158a and the output magnetic disk 158b to the circuit board 156. In addition, the circuit board 156 is coupled to the control unit 145, so that the dual encoder 150 may provide the sensing signals to the control unit 145 through the circuit board 156.

In this way, the control unit 145 may receive a signal related to a rotational displacement of the input magnetic disk 158a (corresponding to the input rotating member 152, the input shaft 122, and the power input component 132, that is, corresponding to the input end) from the input sensor 159a, a sensing signal related to a rotational displacement of the output magnetic disk 158b (corresponding to the output rotating member 154, the output shaft 124, and the power output component 134, that is, corresponding to the output end) from the output sensor 159b, and a sensing signal related to torque and/or vibration of the power input component 132 from the sensor 140, and then integrate the signals to determine a force state of the output end.

Furthermore, in this embodiment, the input magnetic disk 158a and the output magnetic disk 158b are disposed coplanar and coaxially, and the input sensor 159a and the output sensor 159b are disposed coplanar and coaxially. In this way, the single circuit board 156 may be used to carry the two sensors 159a and 159b, and enable the two sensors 159a and 159b to respectively correspond to the two magnetic disks 158a and 158b. As a result, a size of the joint actuator 100 in an axial direction may be reduced.

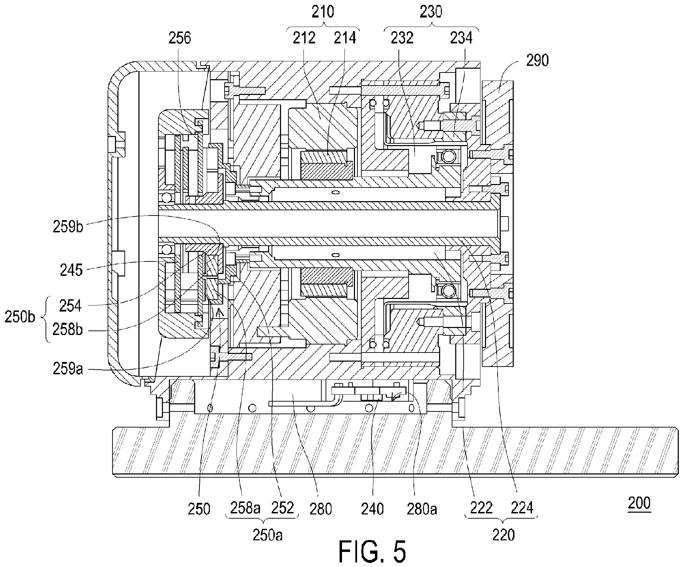

FIG. 5 is a cross-sectional view of a joint actuator of a robot according to another embodiment of the disclosure. In a joint actuator 200 shown in FIG. 5, a driving device 210, a coil 212, a rotor 214, a driving shaft 220, a reducer 230, a power input component 232, a power output component 234, a control unit 245, a dual encoder 250, an input module 250a, an output module 250b, an input rotating member 252, an output rotating member 254, a circuit board 256, an input magnetic disk 258a, an output magnetic disk 258b, an input sensor 259a, an output sensor 259b, a casing 280, and a connecting member 290 are similar in terms of configuration and functions to the driving device 110, the coil 112, the rotor 114, the driving shaft 120, the reducer 130, the power input component 132, the power output component 134, the control unit 145, the dual encoder 150, the input module 150a, the output module 150b, the input rotating member 152, the output rotating member 154, the circuit board 156, the input magnetic disk 158a, the output magnetic disk 158b, the input sensor 159a, the output sensor 159b, the casing 180, and the connecting member 190. Thus, details in this regard will not be further reiterated in the following.

A difference between the joint actuator 200 shown in FIG. 5 and the joint actuator 100 shown in FIG. 1 is that a sensor 240 of the joint actuator 200 is disposed on an inner wall 280a of the casing 280 to detect vibration of the joint actuator 200 and/or impact force from the robot arm. The sensor 240 is, for example, a motion sensor, and the motion sensor may be an accelerometer, a speedometer, and an inertial measurement unit (IMU), etc., and the disclosure is not limited thereto.

As mentioned above, the sensor 240 in this embodiment is directly disposed on the inner wall 280a of the casing 280 of the joint actuator 200, rather than at the end of the robot arm. In this way, an additional connecting member does not need to be used to transmit force between the sensor 240 and the joint actuator 200, and the sensor 240 does not need to be routed to the joint actuator 200 additionally, thereby reducing the size and weight of the robot arm of the robot. In addition, the sensor 240 directly disposed on inner wall 280a of the housing 280 of the joint actuator 200 may provide rapid and real-time feedback and may directly detect the vibration of the joint actuator 200, such that a warning signal is directly generated when abnormal vibration is sensed. The joint actuator 200 is controlled to perform a corresponding actuation in real time according to the feedback of the sensor 240, such as real-time stop or real-time reduction of the output force to prevent the robot arm 50 from colliding with the target.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by skilled persons without departing from the scope of the present invention as defined by the following claims. Moreover, no element and component in the present disclosure is intended to be dedicated to the public regardless of whether the element or component is explicitly recited in the following claims.

## Claims

1. A joint actuator (100, 200) of a robot, comprising a casing (180, 280), a driving device (110, 210), a driving shaft (120, 220), a reducer (130, 230), and a sensor (140, 240), wherein
the driving device (110, 210) is disposed in the casing (180, 280);
the driving shaft (120, 220) is disposed in the casing (180, 280) and connected to the driving device (110, 210), wherein the driving device (110, 210) is adapted to drive the driving shaft (120, 220) to rotate;
the reducer (130, 230) is disposed in the casing (180, 280) and comprises a power input component (132, 232) and a power output component (134, 234), wherein the power input component (132, 232) and the power output component (134, 234) are sleeved around the driving shaft (120, 220), and the power input component (132, 232) is connected between the driving shaft (120, 220) and the power output component (134, 234); and
the sensor (140, 240) is disposed on the power input component (132, 232) or the casing (180, 280).

2. The joint actuator (100, 200) of the robot according to claim 1, wherein the power input component (132, 232) is a cap-shaped flex spline, and the power output component (134, 234) is a circular spline.

3. The joint actuator (100) of the robot according to claim 1 or 2, wherein the sensor (140) is disposed on the power input component (132), and the sensor (140) is a strain gauge or a motion sensor.

4. The joint actuator (200) of the robot according to claim 1 or 2, wherein the sensor (240) is disposed on the casing (280), and the sensor (240) is a motion sensor.

5. The joint actuator (200) of the robot according to claim 1, 2 or 4, wherein the sensor (240) is disposed on an inner wall (280a) of the casing (280).

6. The joint actuator (100, 200) of the robot according to any one of the preceding claims, wherein the sensor (140, 240) is adapted to detect a vibration state of the joint actuator (100, 200).

7. The joint actuator (100, 200) of the robot according to any one of the preceding claims, wherein the sensor (140, 240) transmits a sensing signal to a control unit (145, 245) of the joint actuator (100, 200).

8. The joint actuator of the robot according to any one of the preceding claims, comprising a dual encoder (150, 250), wherein the dual encoder (150, 250) is connected to the driving device (110, 210) and the driving shaft (120, 220), and the driving device (110, 210) is located between the dual encoder (150, 250) and the reducer (130, 230).

9. The joint actuator (100, 200) of the robot according to claim 8, wherein the dual encoder (150, 250) comprises an input module (150a, 250a) and an output module (150b, 250b), the driving shaft (120, 220) comprises an input shaft (122, 222) and an output shaft (124, 224), the input module (150a, 250a) is connected to the input shaft (122, 222) and rotates synchronously, the output module (150b, 250b) is connected to the output shaft (124, 224) and rotates synchronously, and the input module (150a, 250a) and the output module (150b, 250b) are disposed coaxially.

10. The joint actuator (100, 200) of the robot according to claim 9, wherein the input module (150a, 250a) comprises an input magnetic disk (158a, 258a) and an input rotating member (152, 252), and the output module (150b, 250b) comprises an output magnetic disk (158b, 258b) and an output rotating member (154, 254), wherein the input magnetic disk (158a, 258a) is fixed to the input rotating member (152, 252), the input rotating member (152, 252) is locked to the input shaft (122, 222), the output magnetic disk (158b, 258b) is fixed to the output rotating member (154, 254), and the output rotating member (154, 254) is locked to the output shaft (124, 224).

11. The joint actuator (100, 200) of the robot according to any one of the claims 8 - 10, wherein the dual encoder (150, 250) comprises a circuit board (156, 256), an input sensor (159a, 259a), and an output sensor (159b, 259b), the input sensor (159a, 259a) and the output sensor (159b, 259b) are disposed on the circuit board (156, 256), the input sensor (159a, 259a) corresponds to the input magnetic disk (158a, 258a) of the input rotating member (152, 252), and the output sensor (159b, 259b) corresponds to the output magnetic disk (158b, 258b) of the output rotating member (154, 254).

12. The joint actuator (100, 200) of the robot according to any one of claims 10 or 11, wherein the input magnetic disk (158a, 258a) and the output magnetic disk (158b, 258b) are disposed coplanar.

13. The joint actuator (100, 200) of the robot according to any one of the preceding claims 8 - 12, comprising a control unit (145, 245), wherein the control unit (145, 245) is electrically coupled to the sensor (140, 240) and the dual encoder (150, 250) to receive a sensing signal of the sensor (140, 240).

14. The joint actuator (100, 200) of the robot according to any one of claims 11, 12 or 13, wherein the input sensor (159a, 259a) and the output sensor (159b, 259b) are disposed coplanar, the circuit board (156, 256) is electrically coupled to the control unit (145, 245), the input sensor (159a, 259a) and the output sensor (159b, 259b) are adapted to respectively provide sensing signals to the circuit board (156, 256), and the circuit board (156, 256) provides the sensing signals to the control unit (145, 245).

15. The joint actuator (100) of the robot according to any one of the preceding claims, wherein the power output component (134) is connected to a robot arm (50) of the robot.
